# EUROPÄISCHE PATENTSCHRIFT

(11) **EP 4 475 011 B1**
(45) Veröffentlichungstag und Bekanntmachung des Hinweises auf die Patenterteilung: **08.07.2026**
(21) Anmeldenummer: 24174757.5
(22) Anmeldetag: 08.05.2024
(51) Int. Cl.: G06F 18/20, B60W 40/04, B60W 60/00, G06V 20/56

(54) **COMPUTERIMPLEMENTIERTES VERFAHREN UND SYSTEM ZUR KLASSIFIKATION EINER VERKEHRSSITUATION**
COMPUTER-IMPLEMENTED METHOD AND SYSTEM FOR CLASSIFYING A TRAFFIC SITUATION
PROCÉDÉ MIS EN UVRE PAR ORDINATEUR ET SYSTÈME DE CLASSIFICATION D'UNE SITUATION DE TRAFIC

(30) Priorität: 07.06.2023 DE 102023114947
(43) Veröffentlichungstag der Anmeldung: 11.12.2024
(73) Patentinhaber: dSPACE SE & Co. KG, 33102 Paderborn (DE)
(72) Erfinder: Rossi, André, 33102 Paderborn (DE); Karaman, Luka, 33102 Paderborn (DE); Atorf, Philipp, 33102 Paderborn (DE); Topic, Jakov, 10000 Zagreb (HR); Sowa, Cathrina, 33102 Paderborn (DE)

(56) Entgegenhaltungen:
- DE-B3- 102022 112 060
- YU XIAO ET AL: "Leader-follower formation of vehicles with velocity constraints and local coordinate frames", SCIENCE CHINA INFORMATION SCIENCES, SCIENCE CHINA PRESS, BEIJING, vol. 60, no. 7, 9 June 2017 (2017-06-09), pages 1 - 15, XP036261783, ISSN: 1674-733X, [retrieved on 20170609], DOI: 10.1007/S11432-016-9094-1
- YANG ZHENG ET AL: "Cooperative Control of Heterogeneous Connected Vehicles with Directed Acyclic Interactions", ARXIV.ORG, CORNELL UNIVERSITY LIBRARY, 201 OLIN LIBRARY CORNELL UNIVERSITY ITHACA, NY 14853, 11 May 2018 (2018-05-11), XP081454598, DOI: 10.1109/MITS.2018.2889654

## Beschreibung

Die vorliegende Erfindung betrifft ein computerimplementiertes Verfahren zur Klassifikation einer durch einen Datensatz von Umfelddaten eines Kraftfahrzeugs umfassten, vorgegebenen Verkehrssituation. Die vorliegende Erfindung betrifft des Weiteren ein System zur Klassifikation einer durch einen Datensatz von Umfelddaten eines Kraftfahrzeugs umfassten, vorgegebenen Verkehrssituation.

Die Erfindung wird in den angehängten Ansprüchen definiert.

### Stand der Technik

Zur Erstellung von Testszenarien für Simulationen ist die Durchführung von Testfahrten erforderlich. Die hierdurch gewonnenen Sensordaten werden sodann in ein logisches Szenario abstrahiert.

Eingangsdaten sind dabei Rohdaten, also Sensordaten aus realen Messfahrten im Sinne von Aufzeichnungen von Radarechos, 3D-Punktewolken aus Lidarmessungen und Bilddaten. Ergebnisdaten sind simulierbare Fahrszenarien, die einerseits eine Umgebung und andererseits auch Trajektorien umfassen.

"Szenario-Optimierung für die Absicherung von automatisierten und autonomen Fahrsystemen (Florian Hauer, Bernd Holzmüller, arXiv:1901.05680)" offenbart Verfahren zur Verifikation und Validierung automatisierter und autonomer Fahrsysteme, insbesondere das Finden geeigneter Testszenarien für die virtuelle Absicherung.

Die Testmethodik sieht dabei die Adaption einer metaheuristischen Suche vor, um Szenarien zu optimieren. Hierfür muss ein passender Suchraum und eine geeignete Gütefunktion aufgestellt werden. Ausgehend von einer abstrakten Beschreibung der Funktionalität und Anwendungsfälle des Systems werden parametrisierte Szenarien abgeleitet.

DE 10 2022 112060 B3 (PORSCHE AG [DE]) 20. April 2023 (2023-04-20), offenbart eine strukturierte Szenariendatenbank, aus der ein Testagent automatisiert Testszenarien zur virtuellen Kalibrierung und Validierung von Fahrerassistenzsystemen erzeugt.

Es wird davon ausgegangen, dass bestimmte Parameter einen großen Einfluss auf die Situation ausüben. Zum Beispiel wird eine Situation, in der eine Notbremsung stattfindet, hauptsächlich durch die Geschwindigkeiten der beiden Verkehrsteilnehmer bestimmt. Für den Anwender ist es daher von entscheidender Bedeutung, eine Verteilung der Werte dieser Parameter zu kennen und zu wissen, welche Teile nicht durch die Daten oder die Simulation abgedeckt sind. Die fehlenden Datenpunkte müssen entweder in der Realität oder in der Simulation gesammelt werden.

Für den Anwender ist somit eine effektive Auswertung des erzeugten Datensatzes wünschenswert, um kritische Situationen zu identifizieren und in leicht variierten Versionen desselben Simulationsszenarios zu testen.

Ferner werden die meisten Szenarien, die für die Erprobung autonomer Fahrfunktionen erstellt werden, a priori festgelegt und stützen sich auf Expertenwissen darüber, welche Szenarien für welchen Testzweck benötigt werden.

Andererseits basieren Methoden, die auf reale Daten zurückgreifen, auf Algorithmen des maschinellen Lernens, was eine Verallgemeinerung für den Fall erschwert, dass eine andere, ähnliche Verkehrssituation gewünscht wird.

Demzufolge besteht ein Bedarf, bestehende Verfahren zur Analyse von Fahrszenarien-Datensätzen dahingehend zu verbessern, dass eine effektive Identifizierung und Kategorisierung kritischer Situationen ermöglicht werden kann.

Es ist daher Aufgabe der Erfindung, ein Verfahren zur Klassifikation einer durch einen Datensatz von Umfelddaten eines Kraftfahrzeugs umfassten, vorgegebenen Verkehrssituation bereitzustellen, welches eine effektive Identifizierung und Kategorisierung kritischer Verkehrssituationen von Interesse ermöglicht.

### Offenbarung der Erfindung

Die Aufgabe wird erfindungsgemäß durch ein computerimplementiertes Verfahren zur Klassifikation einer durch einen Datensatz von Umfelddaten eines Kraftfahrzeugs umfassten, vorgegebenen Verkehrssituation mit den Merkmalen des Patentanspruchs 1 gelöst.

Die Aufgabe wird erfindungsgemäß ferner durch ein System zur Klassifikation einer durch einen Datensatz von Umfelddaten eines Kraftfahrzeugs umfassten, vorgegebenen Verkehrssituation mit den Merkmalen des Patentanspruchs 14 gelöst.

Die Erfindung betrifft ein computerimplementiertes Verfahren zur Klassifikation einer durch einen Datensatz von Umfelddaten eines Kraftfahrzeugs umfassten, vorgegebenen Verkehrssituation.

Das Verfahren umfasst ein Bereitstellen eines ersten Datensatzes, insbesondere eines Datenstroms, von eine Vielzahl von Verkehrssituationen umfassenden Sensordaten einer durch zumindest einen fahrzeugseitigen Umfelderkennungssensor erfassten Fahrt eines Ego-Fahrzeugs und/oder eines Fellow-Fahrzeugs.

Des Weiteren umfasst das Verfahren ein Anwenden eines gerichteten Graphen auf den ersten Datensatz, wobei Knoten des gerichteten Graphen den ersten Datensatz jeweils entsprechend einer in einem Zeitintervall erfüllten ersten Bedingung in zumindest ein Segment eines Bewegungsverhaltens des Ego-Fahrzeugs und/oder des Fellow-Fahrzeugs relativ zu einem Fahrzeugumfeld segmentieren, wobei Kanten des gerichteten Graphen Verknüpfungen zwischen den jeweiligen Knoten symbolisieren.

Das Verfahren umfasst darüber hinaus ein Klassifizieren der vorgegebenen Verkehrssituation, falls alle der bestimmten Segmente eine zweite Bedingung der vorgegebenen Verkehrssituation erfüllen, und ein Ausgeben eines, die vorgegebene Verkehrssituation repräsentierende Klasse und/oder einen jeweiligen Start- und Endzeitpunkt des die vorgegebene Verkehrssituation repräsentierenden Segments aufweisenden zweiten Datensatzes.

Die Erfindung betrifft ferner ein System zur Klassifikation einer durch einen Datensatz von Umfelddaten eines Kraftfahrzeugs umfassten, vorgegebenen Verkehrssituation.

Das System umfasst einen Datenspeicher, welcher konfiguriert ist, einen ersten Datensatz, insbesondere einen Datenstrom, von eine Vielzahl von Verkehrssituationen umfassenden Sensordaten einer durch zumindest einen fahrzeugseitigen Umfelderkennungssensor erfassten Fahrt eines Ego-Fahrzeugs und/oder des Fellow-Fahrzeugs bereitzustellen.

Des Weiteren umfasst das Verfahren eine erste Berechnungseinheit, welche konfiguriert ist, einen gerichteten Graphen auf den ersten Datensatz anzuwenden, wobei Knoten des gerichteten Graphen den ersten Datensatz jeweils entsprechend einer in einem Zeitintervall erfüllten ersten Bedingung in zumindest ein Segment eines Bewegungsverhaltens des Ego-Fahrzeugs und/oder des Fellow-Fahrzeugs relativ zu einem Fahrzeugumfeld segmentieren, wobei Kanten des gerichteten Graphen Verknüpfungen zwischen den jeweiligen Knoten symbolisieren.

Das System umfasst darüber hinaus eine zweite Berechnungseinheit, welche konfiguriert ist, die vorgegebene Verkehrssituation zu klassifizieren, falls alle der bestimmten Segmente eine zweite Bedingung der vorgegebenen Verkehrssituation erfüllen, und eine Datenausgabeeinheit, welche konfiguriert ist, einen, die vorgegebene Verkehrssituation repräsentierende Klasse und/oder einen jeweiligen Start- und Endzeitpunkt des die vorgegebene Verkehrssituation repräsentierenden Segments aufweisenden zweiten Datensatz auszugeben.

Die Erfindung betrifft überdies ein Computerprogramm mit Programmcode, um das erfindungsgemäße Verfahren zur Klassifikation einer durch einen Datensatz von Umfelddaten eines Kraftfahrzeugs umfassten, vorgegebenen Verkehrssituation durchzuführen, wenn das Computerprogramm auf einem Computer ausgeführt wird.

Eine Idee der vorliegenden Erfindung ist es, eine verbesserte Datenselektion und ggf. in einem nachfolgenden Schritt basierend darauf eine verbesserte Parameterextraktion von in dem Datensatz von Sensordaten der durch die erste Mehrzahl fahrzeugseitiger Umfelderkennungsensoren erfassten Fahrt eines Ego-Fahrzeugs und/oder Fellow-Fahrzeugs enthaltenen Verkehrssituationen durchzuführen.

Somit können die Daten automatisch nach relevanten Situationen durchsucht und anschließend nur die entsprechend extrahierten Verkehrssituationen in die Simulation gebracht werden.

Die vorliegende Erfindung stellt daher eine Methode der Selektion von Szenarien zur Verfügung, die zur Erkennung von Verkehrssituationen aus Daten der realen Welt verwendet werden kann. Das vorgeschlagene Verfahren ist graphenbasiert und ermöglicht es, Verkehrssituationen sinnvoll zu definieren, die in den bereitgestellten Rohmessdaten erkannt werden sollen.

Die graphenbasierte Struktur ist inhärent mit der Situationsähnlichkeit verknüpft - ähnliche Situationen werden auf entsprechende ähnliche Graphen abgebildet.

Die graphenbasierten Vorlagen können einfach geändert werden, um verschiedene Szenarien zu erkennen, und die Graphen können wiederverwendet und kombiniert werden, um ein komplexeres Verkehrsverhalten zu beschreiben. Mehrere parallel verwendete Graphen ermöglichen es somit, den gesamten Datenstrom mit Blöcken von erkannten Verkehrssituationen wie z.B. Cut-Ins zu beschreiben.

Direkte Sichtbarkeit der Abdeckung des Datenstroms durch erkannte Verkehrssituationen. Außerdem kann der Anwender die zu erkennenden Vorlagen spezifizieren, ohne Code zu schreiben. Der Anwender kann selbst entscheiden, wie einfach generalistisch oder komplex und detailliert die benötigte Vorlage sein soll.

Unter einer Verkehrssituation ist hierbei ein Klein-, Elementar- und/oder größeres Szenario bzw. Verkehrsszenario mit einer Mehrzahl von Verkehrsteilnehmern zu verstehen.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass die zu klassifizierende, vorgegebene Verkehrssituation vorab festgelegt wird, wobei der gerichtete Graph jeweils Segmente der vorgegebenen Verkehrssituation bestimmt. Somit kann in vorteilhafter Weise gemäß der Vorgabe bestimmt bzw. binär klassifiziert werden, ob die durch die jeweilige Verkehrssituation umfassten Segmente in dem ersten Datensatz vorhanden sind.

Gemäß einer weiteren bevorzugten Weiterbildung der Erfindung ist vorgesehen, dass jeder Knoten zumindest einen Eingang und exakt einen Ausgang aufweist, wobei der zumindest eine Eingang jedes Knotens durch eine Kante eines weiteren Knotens oder durch den ersten Datensatz gegeben ist. Die Knoten sind somit in der Lage, einen oder mehrere Eingänge einer vorherigen Schicht zu verarbeiten, so dass mit jeder nachfolgenden Schicht Fahrzeugverhalten einer höheren logischen Ebene bzw. Abstraktionsebene bestimmbar sind.

Gemäß einer weiteren bevorzugten Weiterbildung der Erfindung ist vorgesehen, dass jeder Knoten einen Algorithmus aufweist, welcher auf Eingabedaten des Knotens angewendet wird, wobei der Algorithmus klassifiziert, ob die erste Bedingung des Bewegungsverhaltens des Ego-Fahrzeugs und/oder des Fellow-Fahrzeugs relativ zum Fahrzeugumfeld erfüllt ist.

Die Klassifikation ist hierbei eine binäre Klassifikation, d.h. eine Bestimmung, ob eine ein Segment betreffende vorgegebene Bedingung wahr oder falsch ist.

Gemäß einer weiteren bevorzugten Weiterbildung der Erfindung ist vorgesehen, dass der Algorithmus des jeweiligen Knotens bei Erfüllen der ersten Bedingung einen jeweiligen Start- und Endzeitpunkt des das Bewegungsverhalten repräsentierenden Segments ausgibt. Hierdurch kann in vorteilhafter Weise das relevante Segment, in welchem ein bestimmtes Fahrzeugverhalten auftritt, bestimmt werden.

Gemäß einer weiteren bevorzugten Weiterbildung der Erfindung ist vorgesehen, dass das Segment des Bewegungsverhaltens des Ego-Fahrzeugs und/oder des Fellow-Fahrzeugs relativ zum Fahrzeugumfeld ein Zeitintervall umfassend einen Start- und Endzeitpunkt des durch den ersten Datensatz, insbesondere den Datenstrom, umfassten Bewegungsverhalten des Ego-Fahrzeugs und/oder des Fellow-Fahrzeugs relativ zum Fahrzeugumfeld ist.

Somit kann ausgehend von dem ersten Datensatz umfassend den Datenstrom von eine Vielzahl von Verkehrssituationen umfassenden Sensordaten das entsprechende zeitliche Segment bestimmt werden, dass das Bewegungsverhalten des Ego-Fahrzeugs und/oder des Fellow-Fahrzeugs von Interesse umfasst.

Gemäß einer weiteren bevorzugten Weiterbildung der Erfindung ist vorgesehen, dass der gerichtete Graph eine erste Schicht umfassend zumindest einen Knoten aufweist, dessen Eingang der erste Datensatz ist, wobei eine zweite Schicht des gerichteten Graphen umfassend zumindest einen ersten Knoten und einen zweiten Knoten den ersten Datensatz jeweils entsprechend der ersten Bedingung in zumindest ein Segment des Bewegungsverhaltens des Ego-Fahrzeugs und/oder des Fellow-Fahrzeugs relativ zu einem Fahrzeugumfeld segmentiert, und wobei eine dritte Schicht des gerichteten Graphen umfassend zumindest einen Knoten unter Verwendung der durch die Knoten der zweiten Schicht ausgegebenen Zeitintervalle die vorgegebene Verkehrssituation klassifiziert, falls die Kombination der bestimmten Zeitintervalle die zweite Bedingung der vorgegebenen Verkehrssituation erfüllt.

Die jeweiligen Schichten des Graphen erfüllen somit die Aufgabe, den ersten Datensatz sukzessive entsprechend jeweiliger Vorgaben zu segmentieren, um anhand der bestimmten Segmente zu prüfen, ob eine übergeordnete Verkehrssituation durch die Daten umfasst ist.

Gemäß einer weiteren bevorzugten Weiterbildung der Erfindung ist vorgesehen, dass die zweite Bedingung der vorgegebenen Verkehrssituation angibt, dass die nach der ersten Bedingung bestimmten Segmente des Ego-Fahrzeugs und/oder zumindest ein Segment eines Bewegungsverhaltens des Fellow-Fahrzeugs in einer vorgegebenen Sequenz und/oder innerhalb eines vorgegebenen Zeitintervalls ablaufen. Dadurch kann sichergestellt werden, dass die bestimmten Segmente in einer entsprechenden Sequenz auftreten, welche die vorgegebene Verkehrssituation charakterisiert.

Gemäß einer weiteren bevorzugten Weiterbildung der Erfindung ist vorgesehen, dass das Bewegungsverhalten des Ego-Fahrzeugs und/oder des Fellow-Fahrzeugs relativ zum Fahrzeugumfeld sämtliche im ersten Datensatz detektierbaren, das Bewegungsverhalten repräsentierende Fahrzeugaktionen umfasst. Somit können sämtliche durch unterschiedliche Sensorarten erfassten Daten sowie in den Daten detektierbare Ereignisse zur Identifikation der vorgegebenen Verkehrssituation herangezogen werden.

Gemäß einer weiteren bevorzugten Weiterbildung der Erfindung ist vorgesehen, dass das Bewegungsverhalten des Ego-Fahrzeugs und/oder des Fellow-Fahrzeugs relativ zum Fahrzeugumfeld ein laterales und/oder longitudinales Verhalten des Ego-Fahrzeugs relativ zu einer Verkehrsinfrastruktur und/oder zumindest einem Fellow-Fahrzeug ist und/oder das laterale und/oder longitudinale Verhalten des Fellow-Fahrzeugs relativ zu einer Verkehrsinfrastruktur und/oder zumindest einem Ego-Fahrzeug ist, wobei das Bewegungsverhalten des Ego-Fahrzeugs und/oder des Fellow-Fahrzeugs relativ zum Fahrzeugumfeld ein Spurhalten, ein Spurwechsel, ein Abbiegen, eine konstante oder sich ändernde Beschleunigung und eine sich daraus ergebende Geschwindigkeit, ein Aufleuchten von Bremslichtern, ein Passieren eines Objektes im Fahrzeugumfeld und/oder ein Erkennen eines Verkehrszeichens umfasst.

Das in dem ersten Datensatz detektiertbare Bewegungsverhalten des Ego-Fahrzeugs relativ zu einer Verkehrsinfrastruktur und/oder zumindest einem Fellow-Fahrzeug und umgekehrt umfasst somit eine Vielzahl unterschiedlicher Verhalten der beteiligten Fahrzeuge.

Gemäß einer weiteren bevorzugten Weiterbildung der Erfindung ist vorgesehen, dass die Sensordaten der durch zumindest einen fahrzeugseitigen Umfelderkennungssensor erfassten Fahrt des Ego-Fahrzeugs und/oder des Fellow-Fahrzeugs Positionsdaten eines GNSS-Sensors, IMU-Daten, Kameradaten, LiDAR-Daten, Radardaten und/oder Ultraschalldaten sind. Die Sensordaten können somit aus einer Mehrzahl unterschiedlicher Datenquellen gewonnen werden.

Gemäß einer weiteren bevorzugten Weiterbildung der Erfindung ist vorgesehen, dass auf Grundlage des ausgegebenen zweiten Datensatzes ein virtueller Test zur Validierung einer automatisierten Fahrfunktion des Kraftfahrzeugs durchgeführt wird. Die bestimmte Verkehrssituation kann somit Grundlage eines virtuellen Tests zur Validierung der automatisierten Fahrfunktion des Kraftfahrzeugs bilden.

Gemäß einer weiteren bevorzugten Weiterbildung der Erfindung ist vorgesehen, dass die Ausgabe des gerichteten Graphen und eine Ausgabe eines weiteren gerichteten Graphen zum Klassifizieren einer weiteren vorgegebenen Verkehrssituation verwendet wird, wobei falls eine Kombination der Ausgaben des gerichteten Graphen und des weiteren gerichteten Graphen eine dritte Bedingung der weiteren vorgegebenen Verkehrssituation erfüllen, die weitere vorgegebene Verkehrssituation klassifiziert wird. Eine Kombination einer Mehrzahl ermittelter Verkehrssituationen kann somit in vorteilhafter Weise zur Bestimmung einer weiteren Verkehrssituation verwendet werden.

Die hierin beschriebenen Merkmale des computerimplementierten Verfahrens zur Klassifikation einer durch einen Datensatz von Umfelddaten eines Kraftfahrzeugs umfassten, vorgegebenen Verkehrssituation sind ebenso auf das erfindungsgemäße System zur System zur Klassifikation einer durch einen Datensatz von Umfelddaten eines Kraftfahrzeugs umfassten, vorgegebenen Verkehrssituation und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1a: ein Ablaufdiagramm eines computerimplementierten Verfahrens zur Klassifikation einer durch einen Datensatz von Umfelddaten eines Kraftfahrzeugs umfassten, vorgegebenen Verkehrssituation gemäß einer bevorzugten Ausführungsform der Erfindung;
- Fig. 1b: eine schematische Darstellung eines Cut-In-Szenarios gemäß der bevorzugten Ausführungsform der Erfindung;
- Fig. 2: ein Graph zum Bestimmen des Cut-In-Szenarios gemäß der bevorzugten Ausführungsform der Erfindung;
- Fig. 3: eine schematische Darstellung einer Trajektorie eines Ego-Fahrzeugs gemäß der bevorzugten Ausführungsform der Erfindung;
- Fig. 4: eine schematische Darstellung einer Trajektorie eines Fellow-Fahrzeugs gemäß der bevorzugten Ausführungsform der Erfindung;
- Fig. 5: eine schematische Darstellung von Fahrzeugmanövern während verschiedener Zeitintervalle gemäß der bevorzugten Ausführungsform der Erfindung;
- Fig. 6: eine schematische Darstellung unterschiedlicher Szenarien gemäß der bevorzugten Ausführungsform der Erfindung;
- Fig. 7: ein Graph zum Bestimmen des Cut-In-Szenarios gemäß der bevorzugten Ausführungsform der Erfindung;
- Fig. 8: ein Graph zum Bestimmen eines Drift-Out-Szenarios gemäß der bevorzugten Ausführungsform der Erfindung;
- Fig. 9: ein Graph zum Bestimmen eines Überholmanövers gemäß der bevorzugten Ausführungsform der Erfindung; und
- Fig. 10: eine schematische Darstellung eines Systems zur Klassifikation einer durch einen Datensatz von Umfelddaten eines Kraftfahrzeugs umfassten, vorgegebenen Verkehrssituation gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

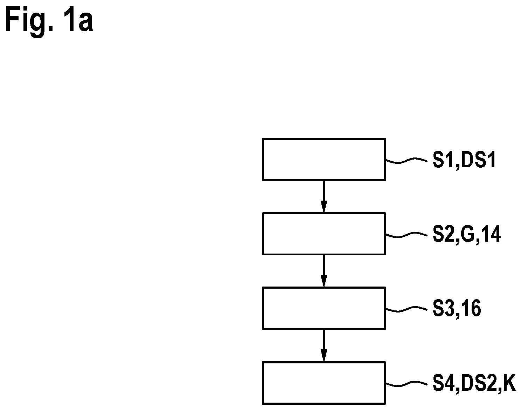

Fig. 1a zeigt ein Ablaufdiagramm eines computerimplementierten Verfahrens zur Klassifikation einer durch einen Datensatz von Umfelddaten eines Kraftfahrzeugs umfassten, vorgegebenen Verkehrssituation gemäß einer bevorzugten Ausführungsform der Erfindung.

Das Verfahren umfasst ein Bereitstellen S1 eines ersten Datensatzes DS1, insbesondere eines Datenstroms, von eine Vielzahl von Verkehrssituationen umfassenden Sensordaten einer durch zumindest einen fahrzeugseitigen Umfelderkennungssensor erfassten Fahrt eines Ego-Fahrzeugs 10 und/oder eines Fellow-Fahrzeugs 12.

Des Weiteren umfasst das Verfahren ein Anwenden S2 eines gerichteten Graphen G auf den ersten Datensatz DS1, wobei Knoten 11 des gerichteten Graphen G den ersten Datensatz DS1 jeweils entsprechend einer in einem Zeitintervall erfüllten ersten Bedingung 14 in zumindest ein Segment eines Bewegungsverhaltens des Ego-Fahrzeugs 10 und/oder des Fellow-Fahrzeugs 12 relativ zu einem Fahrzeugumfeld segmentieren, wobei Kanten 15 des gerichteten Graphen G Verknüpfungen zwischen den jeweiligen Knoten 11 symbolisieren.

Das Verfahren umfasst überdies ein Klassifizieren S3 der vorgegebenen Verkehrssituation, falls alle der bestimmten Segmente eine zweite Bedingung 16 der vorgegebenen Verkehrssituation erfüllen; und
Ausgeben S4 eines, die vorgegebene Verkehrssituation repräsentierende Klasse K und/oder einen jeweiligen Start- und Endzeitpunkt des die vorgegebene Verkehrssituation repräsentierenden Segments aufweisenden zweiten Datensatzes DS2.

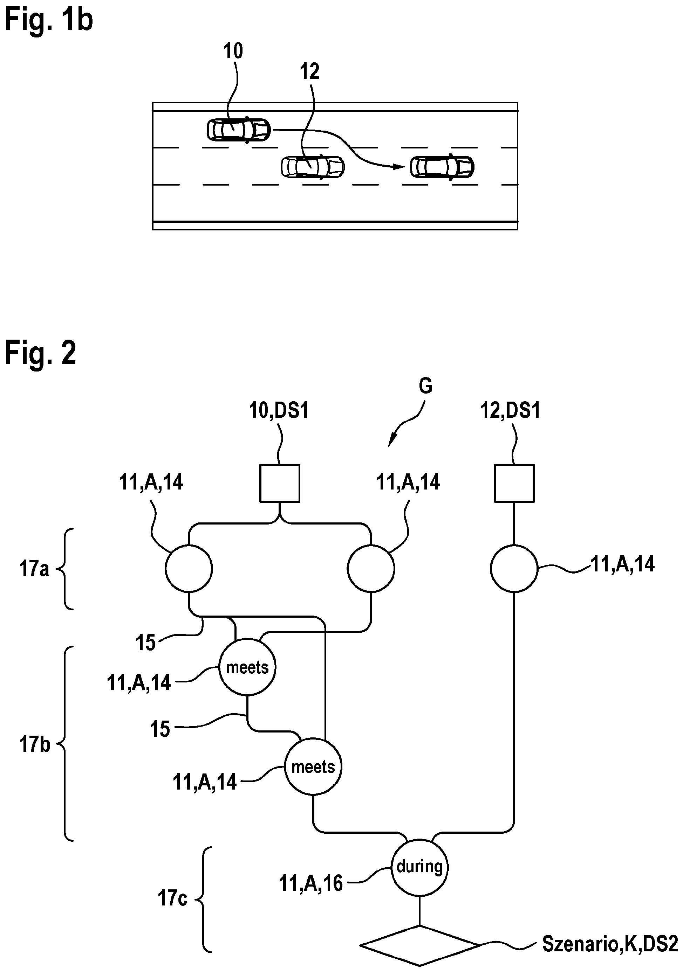

Die Beschreibung des erfindungsgemäßen Konzepts erfolgt anhand des in Fig. 1b dargestellten Beispiels eines Cut-In-Szenarios. In diesem Szenario fährt ein Ego-Fahrzeug 10 auf dem linken Fahrstreifen, bis es vor dem anderen Fahrzeug bzw. Fellow-Fahrzeug 12 ist, das auf dem mittleren Fahrstreifen fährt, und wechselt dann den Fahrstreifen auf den des anderen Fahrzeugs.

Um die Beschreibung von Szenarien wie dem Cut-In zu vereinfachen, wird im Rahmen der folgenden Beschreibung Allen'sche Intervallalgebra verwendet, mit welcher Beziehungen zwischen Zeitintervallen definierbar sind.

Im Kontext von Szenarien werden elementare Bewegungsverhaltensweisen der Fahrzeuge als Zeitintervall verwendet, um eine Bewegung eines Fahrzeugs zu beschreiben. Zum Beispiel kann die Bewegung des Ego-Fahrzeugs 10 in drei Intervalle unterteilt werden: Ein Intervall zum Halten der Fahrspur, gefolgt von einem Intervall zum Wechseln der Fahrspur, gefolgt von einem weiteren Intervall zum Halten der Fahrspur.

Durch Anwendung der Allen'schen Intervallalgebra auf die Zeitintervalle, die zur Beschreibung der Bewegung der Fahrzeuge verwendet werden, kann das Cut-In-Szenario mit drei einfachen Aussagen beschrieben werden:
Ego Sequenz:
   Fahrspur halten trifft Spurwechsel trifft Fahrspur halten.
Fellow Sequenz:
   Fahrspur halten.
   Ferner tritt die Ego-Sequenz während der Fellow-Sequenz auf.

Auf Grundlage dieser Beschreibung wird ein Berechnungsgraph G erstellt, um zu bestimmen, ob ein als Eingabe gegebenes Szenario als Cut-In-Szenario kategorisiert bzw. klassifiziert werden kann. Der resultierende Graph G zur Erkennung eines Cut-In-Szenarios ist in Fig. 2 dargestellt.

Der Graph G besteht aus Knoten 11, die durch Kanten 15 verbunden sind. Jeder Knoten 11 weist einen oder mehrere Eingänge auf und produziert stets einen Ausgang. Die Eingänge der Knoten 11 werden durch die verbundenen Kanten 15 von anderen Knoten 11 definiert. Jeder Knoten 11 implementiert eine Prüfung, die Zeitintervalle der Segmente zurückgibt, bei denen die Prüfung der eingegebenen Zeitintervalle wahr ist.

Der Graph G enthält verschiedene Arten von Knoten 11. Die erste Schicht 17a von Knoten 11 des Graphen G sind Eingabedaten, die auf den Bewegungsdaten der Fahrzeuge basieren, z.B. die Trajektorien der Fahrzeuge. Eine zweite Schicht 17b des Graphen G sind Knoten 11, die die Trajektorien analysieren und in Zeitintervalle wie z.B. "Fahrspur halten" unterteilen.

Diese Zeitintervalle werden dann von den folgenden Knoten 11 kombiniert, um zu prüfen, ob die zeitlichen Abhängigkeiten zwischen den segmentierten Zeitintervallen der Szenariobeschreibung entsprechen z.B. "trifft zusammen" bzw. "meets". Nachdem der letzte Knoten 11 des Graphen G durchlaufen ist, wird das Zeitintervall des identifizierten Cut-In-Szenarios ausgegeben.

Im Folgenden wird die Erstellung des Graphen G beschrieben. Der erste Schritt zur Bestimmung von Szenarien bzw. Verkehrssituationen besteht darin, die Trajektorien der Verkehrsteilnehmer in Zeitintervalle zu segmentieren, um die Bewegung semantisch zu beschreiben. Dazu werden Knoten 11 verwendet, die Segmentierungsalgorithmen implementieren, die eine Trajektorie in die seitlichen Zeitintervalle oder Segmente segmentieren können, z.B. für das Cut-In-Szenario in "Fahrspur halten"- und "Fahrspurwechsel"-Segmente.

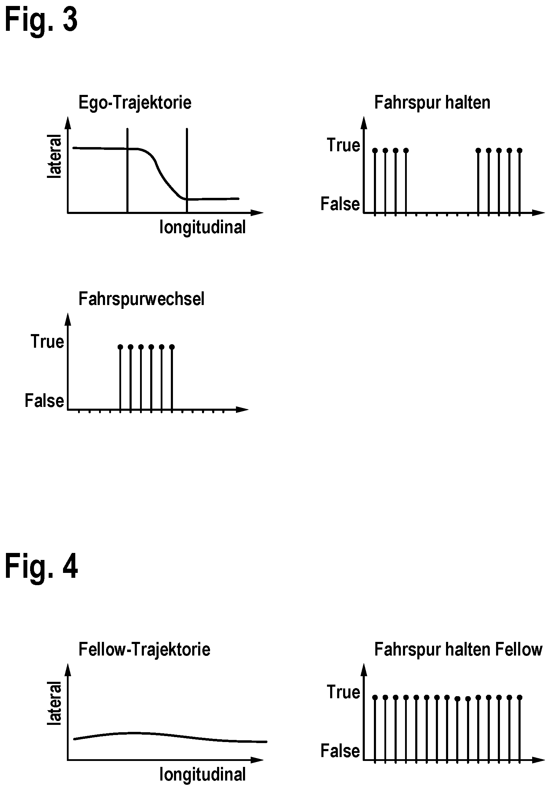

Für das Ego-Fahrzeug 10 aus dem Cut-In-Beispiel in Fig. 1 kann die Trajektorie in die in Fig. 3 dargestellten Zeitintervalle segmentiert werden. Wie bereits oben erwähnt, ergibt die Segmentierung der Trajektorie drei Zeitintervalle: "Fahrspur halten", "Fahrspurwechsel" und ein weiteres Intervall "Fahrspur halten".

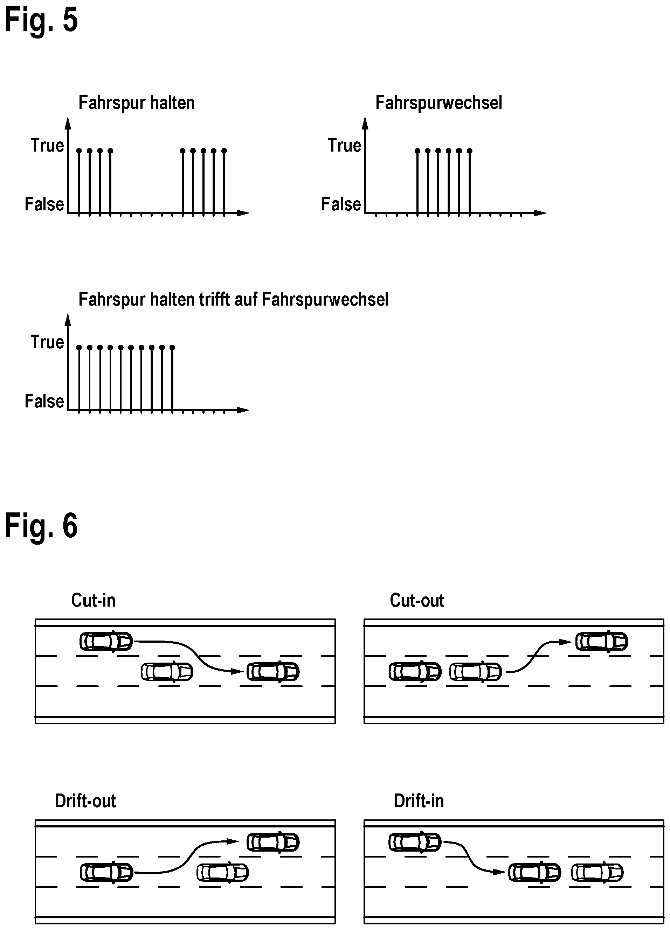

Führt man dieselbe Segmentierung für die Trajektorie des Fellow-Fahrzeugs 12 aus dem Beispiel durch, ergibt sich nur ein "Fahrspur halten"-Segment (Fig. 5).

Nach der Segmentierung werden die Zeitintervalle mit Hilfe von Knoten 11 rekombiniert, die Prüfungen auf der Grundlage der Allen'schen Intervallalgebra durchführen. Der erste auf der Allen'schen Intervallalgebra basierende Knoten 11, der für den Graph G des Cut-In-Szenarios verwendet wird, ist "Meet". Der Knoten 11 "Meet" hat zwei Eingänge: Die Zeitintervalle "Fahrspur halten" und "Fahrspurwechsel" aus den Segmentierungsknoten 11 der vorherigen Schicht des Graphen G.

Die Prüfung des Knotens 11 "Meet" liefert das Zeitintervall, in dem auf ein "Fahrspur halten"-Zeitintervall direkt ein "Fahrspurwechsel"-Zeitintervall folgt. Im Beispiel in Fig. 5 ist dies der Fall für das erste Zeitintervall der "Fahrspur halten"- und "Fahrspurwechsel"-Segmentierungsergebnisse. Die Ausgabe dieses Knotens 11 ist das kombinierte Zeitintervall der "Fahrspur halten"- und "Fahrspurwechsel"-Zeitintervalle.

Das gleiche Verfahren wird auf den nächsten "Meets"-Knoten 11 angewendet, der prüft, ob auf die Ausgabe des ersten "Meets"-Knotens 11 direkt ein weiteres "Fahrspur halten"-Zeitintervall folgt. Der letzte Knoten 11 des Graphen G "During" prüft, ob das Zeitintervall der Ausgabe des "Meets"-Knotens 11, der die Sequenz des Ego-Fahrzeugs 10 beschreibt, im selben Zeitintervall liegt wie das erkannte "Fahrspur halten"-Zeitintervall des Fellow-Fahrzeugs 12.

Wenn man nur die zeitliche Beschreibung der Bewegung der Fahrzeuge betrachtet, kann man sehen, dass es möglich ist, mehrere andere Szenarien mit dem Graphen G zu bestimmen, der an sich nur für die Erkennung des Cut-In-Szenarios konzipiert wurde (Fig. 6). In allen vier Szenarien führen die Ego- und Fellow-Fahrzeuge die gleiche Bewegung aus, wenn man zusätzliche Szenarienparameter außer Acht lässt.

Deshalb müssen dem Graphen G zusätzliche Knoten 11 hinzugefügt werden, um zusätzliche Szenarioparameter zu validieren, die im Fall des Cut-In-Szenarios die räumlichen Parameter zur Beschreibung der relativen Positionen der Fahrzeuge und der relativen Fahrspuren, auf denen die Fahrzeuge fahren, sind. Um das Cut-In-Szenario zu unterscheiden, kann man zwei zusätzliche Bedingungen hinzufügen:
1) Ego- und Fellow-Fahrzeug 10, 12 kommen auf der gleichen Fahrspur ins Ziel.
2) Das Ego-Fahrzeug 10 kommt vor dem Fellow-Fahrzeug 12 ins Ziel.

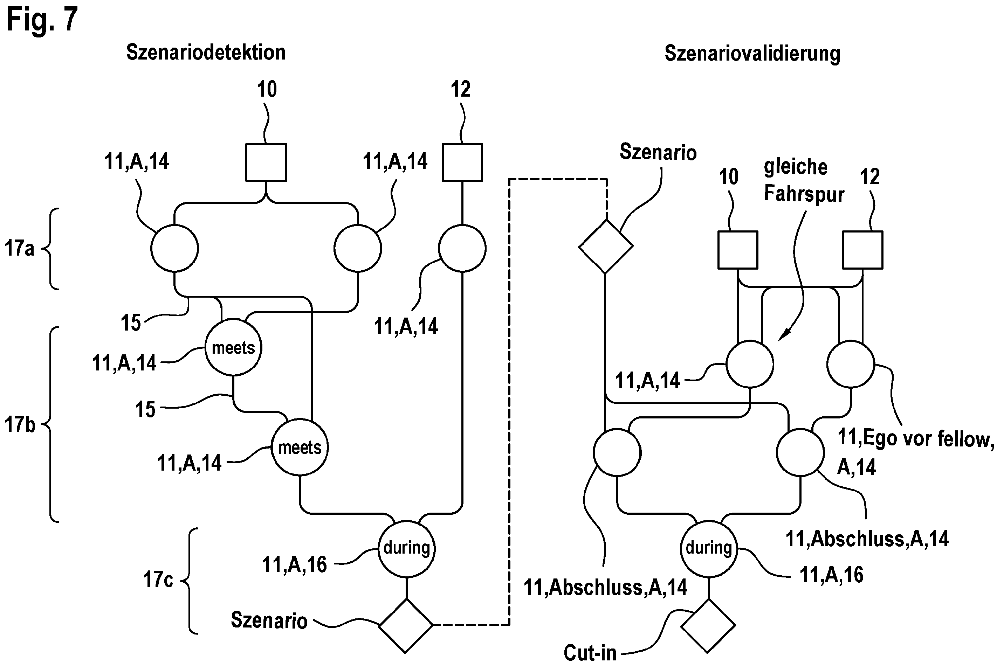

Wenn man diese beiden Bedingungen umwandelt und zur Figur hinzufügt, um ein Cut-In-Szenario zu detektieren, sieht das endgültige Diagramm wie in Fig. 7 dargestellt aus.

Im zweiten Graphen G in gibt es wiederum eine erste Schicht 17a mit den Knoten 11 "Gleiche Fahrspur" und "Ego vor Fellow", die eine Segmentierung auf der Grundlage der Fahrzeugtrajektorien vornehmen und die Zeitintervalle ausgeben, in denen sich beide Fahrzeuge auf der gleichen Spur befinden, sowie das Zeitintervall, in dem sich das Ego-Fahrzeug 10 vor dem Fellow-Fahrzeug 12 befindet.

In der zweiten Schicht 17b des zweiten Graphen G werden die Zeitintervalle berechnet, ob das detektierte Zeitintervall des ersten Graphen G durch das Zeitintervall der "Gleiche Fahrspur"- und "Ego vor Fellow"-Knotenausgabe abgeschlossen ist. Der letzte Knoten 11 "During" prüft schließlich, ob die sich ergebenden Zeitintervalle in der gleichen Zeitdauer stattfinden. Bleibt am Ende ein Zeitintervall übrig, ist ein Cut-In-Szenario erkannt worden.

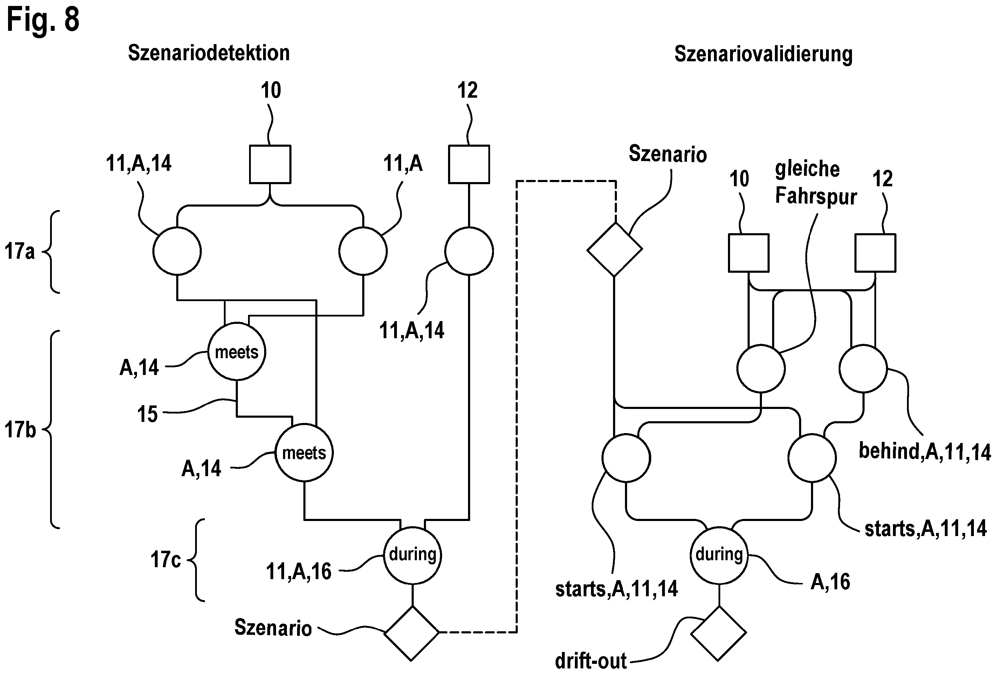

In Fig. 8 müssen nur drei Knoten 11 des Graphen G zur Erkennung eines Cut-In-Szenarios ausgetauscht werden "Infront" -> "Behind" und "Finishes" -> "Starts", um das Drift-Out-Szenario zu erkennen.

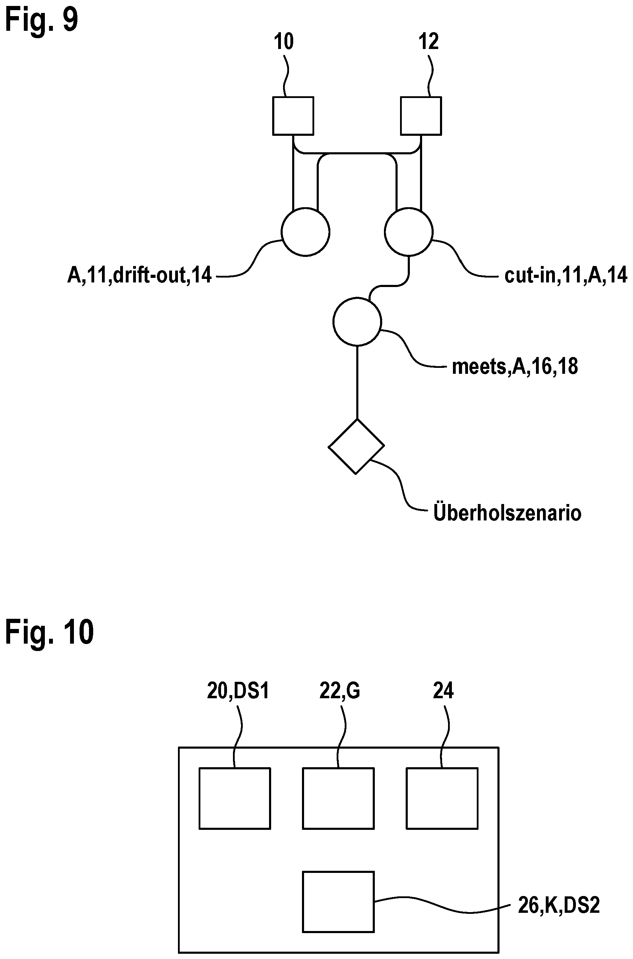

In Fig. 9 ist dargestellt, wie einmal definierte Graphen G zur Erkennung der Szenarien Drift-Out und Cut-In erneut als Knoten 11 definiert und dann kombiniert werden können, um komplexere Verkehrsszenarien wie ein Überholszenario zu erkennen.

Fig. 10 zeigt eine schematische Darstellung eines Systems zur Klassifikation einer durch einen Datensatz von Umfelddaten eines Kraftfahrzeugs umfassten, vorgegebenen Verkehrssituation gemäß der bevorzugten Ausführungsform der Erfindung.

Das System 1 umfasst einen Datenspeicher 20, welcher konfiguriert ist, einen ersten Datensatz DS1, insbesondere einen Datenstrom, von eine Vielzahl von Verkehrssituationen umfassenden Sensordaten einer durch zumindest einen fahrzeugseitigen Umfelderkennungssensor erfassten Fahrt eines Ego-Fahrzeugs 10 und/oder des Fellow-Fahrzeugs 12 bereitzustellen.

Des Weiteren umfasst das System 1 eine erste Berechnungseinheit 22, welche konfiguriert ist, einen gerichteten Graphen G auf den ersten Datensatz DS1 anzuwenden, wobei Knoten 11 des gerichteten Graphen G den ersten Datensatz DS1 jeweils entsprechend einer in einem Zeitintervall erfüllten ersten Bedingung 14 in zumindest ein Segment eines Bewegungsverhaltens des Ego-Fahrzeugs 10 und/oder des Fellow-Fahrzeugs 12 relativ zu einem Fahrzeugumfeld segmentieren, wobei Kanten 15 des gerichteten Graphen G Verknüpfungen zwischen den jeweiligen Knoten 11 symbolisieren.

Das System 1 umfasst darüber hinaus eine zweite Berechnungseinheit 24, welche konfiguriert ist, die vorgegebene Verkehrssituation zu klassifizieren, falls alle der bestimmten Segmente eine zweite Bedingung der vorgegebenen Verkehrssituation erfüllen, und eine Datenausgabeeinheit 26, welche konfiguriert ist, einen, die vorgegebene Verkehrssituation repräsentierende Klasse K und/oder einen jeweiligen Start- und Endzeitpunkt des die vorgegebene Verkehrssituation repräsentierenden Segments aufweisenden zweiten Datensatz DS2 auszugeben.

### Bezugszeichenliste

- 1: System
- 10: Ego-Fahrzeug
- 11: Knoten
- 12: Fellow-Fahrzeug
- 14: erste Bedingung
- 15: Kanten
- 16: zweite Bedingung
- 18: dritte Bedingung
- 20: Datenspeicher
- 22: erste Berechnungseinheit
- 24: zweite Berechnungseinheit
- 26: Datenausgabeeinheit
- A: Algorithmus
- G: Graph
- K: Klasse
- DS1: erster Datensatz
- DS2: zweiter Datensatz
- S1-S4: Verfahrensschritte

## Patentansprüche

1. Computerimplementiertes Verfahren zur Klassifikation einer durch einen Datensatz von Umfelddaten eines Kraftfahrzeugs umfassten, vorgegebenen Verkehrssituation, mit den Schritten:
Bereitstellen (S1) eines ersten Datensatzes (DS1), der als Datenstrom von eine Vielzahl von Verkehrssituationen umfassenden Sensordaten einer durch zumindest einen fahrzeugseitigen Umfelderkennungssensor erfassten Fahrt eines Ego-Fahrzeugs (10) und/oder eines Fellow-Fahrzeugs (12) ausgestaltet ist;
**gekennzeichnet durch** Anwenden (S2) eines gerichteten Graphen (G) auf den ersten Datensatz (DS1), wobei Knoten (11) des gerichteten Graphen (G) den ersten Datensatz (DS1) jeweils entsprechend einer in einem Zeitintervall erfüllten ersten Bedingung (14) in zumindest ein Segment eines Bewegungsverhaltens des Ego-Fahrzeugs (10) und/oder des Fellow-Fahrzeugs (12) relativ zu einem Fahrzeugumfeld segmentieren, wobei Kanten (15) des gerichteten Graphen (G) Verknüpfungen zwischen den jeweiligen Knoten (11) symbolisieren und jeder Knoten (11) einen Algorithmus (A) aufweist, welcher auf Eingabedaten des Knotens (11) angewendet wird und klassifiziert, ob die erste Bedingung (14) erfüllt ist;
Klassifizieren (S3) der vorgegebenen Verkehrssituation, falls alle der bestimmten Segmente eine zweite Bedingung (16) der vorgegebenen Verkehrssituation erfüllen; und Ausgeben (S4) eines zweiten Datensatzes (DS2), der eine die vorgegebene Verkehrssituation repräsentierende Klasse (K) und/oder einen jeweiligen Start- und Endzeitpunkt des die vorgegebene Verkehrssituation repräsentierenden Segments aufweist;
wobei der gerichtete Graph (G) eine erste Schicht (17a) umfassend zumindest einen Knoten (11) aufweist, dessen Eingang der erste Datensatz ist, wobei eine zweite Schicht (17b) des gerichteten Graphen (G), umfassend zumindest einen ersten Knoten (11) und einen zweiten Knoten (11), den Datenstrom (DS1) jeweils entsprechend der ersten Bedingung (14) in zumindest ein Segment des Bewegungsverhaltens des Ego-Fahrzeugs (10) und/oder des Fellow-Fahrzeugs (12) relativ zu einem Fahrzeugumfeld segmentiert, wobei das Segment ein Zeitintervall umfassend einen Start- und Endzeitpunkt des durch den Datenstrom (DS1) umfassten Bewegungsverhaltens des Ego-Fahrzeugs (10) und/oder des Fellow-Fahrzeugs (12) relativ zum Fahrzeugumfeld ist, und wobei eine dritte Schicht (17c) des gerichteten Graphen (G), umfassend zumindest einen Knoten (11), unter Verwendung der durch die Knoten (11) der zweiten Schicht (17b) ausgegebenen Zeitintervalle die vorgegebene Verkehrssituation klassifiziert, falls die Kombination der bestimmten Zeitintervalle die zweite Bedingung (16) der vorgegebenen Verkehrssituation erfüllt.

2. Computerimplementiertes Verfahren nach Anspruch 1, wobei die zu klassifizierende, vorgegebene Verkehrssituation vorab festgelegt wird, wobei der gerichtete Graph (G) jeweils Segmente der vorgegebenen Verkehrssituation bestimmt.

3. Computerimplementiertes Verfahren nach Anspruch 1 oder 2, wobei jeder Knoten (11) zumindest einen Eingang und exakt einen Ausgang aufweist, wobei der zumindest eine Eingang jedes Knotens (11) durch eine Kante eines weiteren Knotens (11) oder durch den ersten Datensatz (DS1) gegeben ist.

4. Computerimplementiertes Verfahren nach Anspruch 1, wobei der Algorithmus (A) des jeweiligen Knotens (11) bei Erfüllen der ersten Bedingung (14) einen jeweiligen Start- und Endzeitpunkt des das Bewegungsverhalten repräsentierenden Segments ausgibt.

5. Computerimplementiertes Verfahren nach Anspruch 1, wobei die zweite Bedingung (16) der vorgegebenen Verkehrssituation angibt, dass die nach der ersten Bedingung (14) bestimmten Segmente des Ego-Fahrzeugs (10) und/oder zumindest ein Segment eines Bewegungsverhaltens des Fellow-Fahrzeugs (12) in einer vorgegebenen Sequenz und/oder innerhalb eines vorgegebenen Zeitintervalls ablaufen.

6. Computerimplementiertes Verfahren nach einem der vorhergehenden Ansprüche, wobei das Bewegungsverhalten des Ego-Fahrzeugs (10) und/oder des Fellow-Fahrzeugs (12) relativ zum Fahrzeugumfeld sämtliche im ersten Datensatz (DS1) detektierbaren, das Bewegungsverhalten repräsentierende Fahrzeugaktionen umfasst.

7. Computerimplementiertes Verfahren nach einem der vorhergehenden Ansprüche, wobei das Bewegungsverhalten des Ego-Fahrzeugs (10) und/oder des Fellow-Fahrzeugs (12) relativ zum Fahrzeugumfeld ein laterales und/oder longitudinales Verhalten des Ego-Fahrzeugs (10) relativ zu einer Verkehrsinfrastruktur und/oder zumindest einem Fellow-Fahrzeug (12) ist und/oder das laterale und/oder longitudinale Verhalten des Fellow-Fahrzeugs (12) relativ zu einer Verkehrsinfrastruktur und/oder zumindest einem Ego-Fahrzeug (10) ist, wobei das Bewegungsverhalten des Ego-Fahrzeugs (10) und/oder des Fellow-Fahrzeugs (12) relativ zum Fahrzeugumfeld ein Spurhalten, ein Spurwechsel, ein Abbiegen, eine konstante oder sich ändernde Beschleunigung und eine sich daraus ergebende Geschwindigkeit, ein Aufleuchten von Bremslichtern, ein Passieren eines Objektes im Fahrzeugumfeld und/oder ein Erkennen eines Verkehrszeichens umfasst.

8. Computerimplementiertes Verfahren nach einem der vorhergehenden Ansprüche, wobei die Sensordaten der durch zumindest einen fahrzeugseitigen Umfelderkennungssensor erfassten Fahrt des Ego-Fahrzeugs (10) und/oder des Fellow-Fahrzeugs (12) Positionsdaten eines GNSS-Sensors, IMU-Daten, Kameradaten, LiDAR-Daten, Radardaten und/oder Ultraschalldaten sind.

9. Computerimplementiertes Verfahren nach einem der vorhergehenden Ansprüche, wobei auf Grundlage des ausgegebenen zweiten Datensatzes (DS2) ein virtueller Test zur Validierung einer automatisierten Fahrfunktion des Kraftfahrzeugs durchgeführt wird.

10. Computerimplementiertes Verfahren nach einem der vorhergehenden Ansprüche, wobei die Ausgabe des gerichteten Graphen (G) und eine Ausgabe eines weiteren gerichteten Graphen (G) zum Klassifizieren einer weiteren vorgegebenen Verkehrssituation verwendet wird, wobei falls eine Kombination der Ausgaben des gerichteten Graphen (G) und des weiteren gerichteten Graphen (G) eine dritte Bedingung (18) der weiteren vorgegebenen Verkehrssituation erfüllen, die weitere vorgegebene Verkehrssituation klassifiziert wird.

11. System (1) zur Klassifikation einer durch einen Datensatz von Umfelddaten eines Kraftfahrzeugs umfassten, vorgegebenen Verkehrssituation, mit:
einem Datenspeicher (20), welcher konfiguriert ist, einen ersten Datensatz (DS1), der als Datenstrom von eine Vielzahl von Verkehrssituationen umfassenden Sensordaten einer durch zumindest einen fahrzeugseitigen Umfelderkennungssensor erfassten Fahrt eines Ego-Fahrzeugs (10) und/oder des Fellow-Fahrzeugs (12) ausgestaltet ist, bereitzustellen;
**gekennzeichnet durch** eine erste Berechnungseinheit (22), welche konfiguriert ist, einen gerichteten Graphen (G) auf den ersten Datensatz (DS1) anzuwenden, wobei Knoten (11) des gerichteten Graphen (G) den ersten Datensatz (DS1) jeweils entsprechend einer in einem Zeitintervall erfüllten ersten Bedingung (14) in zumindest ein Segment eines Bewegungsverhaltens des Ego-Fahrzeugs (10) und/oder des Fellow-Fahrzeugs (12) relativ zu einem Fahrzeugumfeld segmentieren, wobei Kanten (15) des gerichteten Graphen (G) Verknüpfungen zwischen den jeweiligen Knoten (11) symbolisieren und jeder Knoten (11) einen Algorithmus (A) aufweist, welcher auf Eingabedaten des Knotens (11) angewendet wird und klassifiziert, ob die erste Bedingung (14) erfüllt ist;
eine zweite Berechnungseinheit (24), welche konfiguriert ist, die vorgegebene Verkehrssituation zu klassifizieren, falls alle der bestimmten Segmente eine zweite Bedingung der vorgegebenen Verkehrssituation erfüllen; und
eine Datenausgabeeinheit (26), welche konfiguriert ist, einen zweiten Datensatz (DS2) auszugeben, der eine die vorgegebene Verkehrssituation repräsentierende Klasse (K) und/oder einen jeweiligen Start- und Endzeitpunkt des die vorgegebene Verkehrssituation repräsentierenden Segments aufweist wobei der gerichtete Graph (G) eine erste Schicht (17a) umfassend zumindest einen Knoten (11) aufweist, dessen Eingang der erste Datensatz ist, wobei eine zweite Schicht (17b) des gerichteten Graphen (G), umfassend zumindest einen ersten Knoten (11) und einen zweiten Knoten (11), den Datenstrom (DS1) jeweils entsprechend der ersten Bedingung (14) in zumindest ein Segment des Bewegungsverhaltens des Ego-Fahrzeugs (10) und/oder des Fellow-Fahrzeugs (12) relativ zu einem Fahrzeugumfeld segmentiert, wobei das Segment ein Zeitintervall umfassend einen Start- und Endzeitpunkt des durch den Datenstrom (DS1) umfassten Bewegungsverhaltens des Ego-Fahrzeugs (10) und/oder des Fellow-Fahrzeugs (12) relativ zum Fahrzeugumfeld ist, und wobei eine dritte Schicht (17c) des gerichteten Graphen (G), umfassend zumindest einen Knoten (11), unter Verwendung der durch die Knoten (11) der zweiten Schicht (17b) ausgegebenen Zeitintervalle die vorgegebene Verkehrssituation klassifiziert, falls die Kombination der bestimmten Zeitintervalle die zweite Bedingung (16) der vorgegebenen Verkehrssituation erfüllt.

12. Computerprogramm mit Programmcode, um ein Verfahren zur Klassifikation einer durch einen Datensatz von Umfelddaten eines Kraftfahrzeugs umfassten, vorgegebenen Verkehrssituation nach einem der Ansprüche 1 bis 10 durchzuführen, wenn das Computerprogramm auf einem Computer ausgeführt wird.

## Claims

1. computer-implemented method for classifying a predetermined traffic situation comprised by a data set of environment data of a motor vehicle, comprising the steps of
providing (S1) a first data set (DS1), which is configured as a data stream of sensor data comprising a plurality of traffic situations of a journey of an ego vehicle (10) and/or a fellow vehicle (12) detected by at least one vehicle-side environment detection sensor;
**characterised by** applying (S2) a directed graph (G) to the first data set (DS1), wherein nodes (11) of the directed graph (G) segment the first data set (DS1) into at least one segment of a movement behaviour of the ego vehicle (10) and/or the fellow vehicle (12) relative to a vehicle environment in each case in accordance with a first condition (14) fulfilled in a time interval, wherein edges (15) of the directed graph (G) symbolise links between the respective nodes (11) and each node (11) comprises an algorithm (A) which is applied to input data of the node (11) and classifies whether the first condition (14) is fulfilled;
classifying (S3) the predetermined traffic situation if all of the determined segments fulfil a second condition (16) of the predetermined traffic situation; and
outputting (S4) a second data set (DS2) comprising a class (K) representing the predetermined traffic situation and/or a respective start and end time of the segment representing the predetermined traffic situation;
wherein the directed graph (G) has a first layer (17a) comprising at least one node (11), the input of which is the first data set, wherein a second layer (17b) of the directed graph (G), comprising at least a first node (11) and a second node (11), segments the data stream (DS1) into at least one segment of the movement behaviour of the ego vehicle (10) and/or the fellow vehicle (12) relative to a vehicle environment in accordance with the first condition (14) in each case, wherein the segment is a time interval comprising a start and end time of the movement behaviour of the ego vehicle (10) and/or the fellow vehicle (12) relative to the vehicle environment comprised by the data stream (DS1), and wherein a third layer (17c) of the directed graph (G), comprising at least one node (11), classifies the predetermined traffic situation using the time intervals output by the nodes (11) of the second layer (17b) if the combination of the determined time intervals fulfils the second condition (16) of the predetermined traffic situation.

2. computer-implemented method according to claim 1, wherein the predetermined traffic situation to be classified is determined in advance, wherein the directed graph (G) determines respective segments of the predetermined traffic situation.

3. computer-implemented method according to claim 1 or 2, wherein each node (11) has at least one input and exactly one output, wherein the at least one input of each node (11) is given by an edge of a further node (11) or by the first data set (DS1).

4. computer-implemented method according to claim 1, wherein the algorithm (A) of the respective node (11) outputs a respective start and end time of the segment representing the movement behaviour when the first condition (14) is fulfilled.

5. computer-implemented method according to claim 1, wherein the second condition (16) of the predetermined traffic situation indicates that the segments of the ego vehicle (10) determined according to the first condition (14) and/or at least one segment of a movement behaviour of the fellow vehicle (12) run in a predetermined sequence and/or within a predetermined time interval.

6. computer-implemented method according to one of the preceding claims, wherein the movement behaviour of the ego vehicle (10) and/or the fellow vehicle (12) relative to the vehicle environment comprises all vehicle actions that can be detected in the first data set (DS1) and represent the movement behaviour.

7. The computer-implemented method according to any one of the preceding claims, wherein the movement behaviour of the ego vehicle (10) and/or the fellow vehicle (12) relative to the vehicle environment is a lateral and/or longitudinal behaviour of the ego vehicle (10) relative to a traffic infrastructure and/or at least one fellow vehicle (12) and/or the lateral and/or longitudinal behaviour of the fellow vehicle (12) relative to a traffic infrastructure and/or at least one ego vehicle (10), wherein the movement behaviour of the ego vehicle (10) and/or the fellow vehicle (12) relative to the vehicle environment comprises lane keeping, lane changing, turning, constant or changing acceleration and a resulting speed, flashing of brake lights, passing an object in the vehicle environment and/or recognition of a traffic sign.

8. computer-implemented method according to one of the preceding claims, wherein the sensor data of the journey of the ego vehicle (10) and/or the fellow vehicle (12) detected by at least one vehicle-side environment detection sensor are position data of a GNSS sensor, IMU data, camera data, LiDAR data, radar data and/or ultrasonic data.

9. computer-implemented method according to one of the preceding claims, wherein a virtual test for validating an automated driving function of the motor vehicle is carried out on the basis of the output second data set (DS2).

10. computer-implemented method according to one of the preceding claims, wherein the output of the directed graph (G) and an output of a further directed graph (G) are used to classify a further predetermined traffic situation, wherein if a combination of the outputs of the directed graph (G) and the further directed graph (G) fulfil a third condition (18) of the further predetermined traffic situation, the further predetermined traffic situation is classified.

11. system (1) for classifying a predetermined traffic situation comprised by a data set of environment data of a motor vehicle, comprising:
a data memory (20) which is configured to provide a first data set (DS1) which is configured as a data stream of sensor data, comprising a plurality of traffic situations, of a journey of an ego vehicle (10) and/or the fellow vehicle (12) detected by at least one vehicle-side environment detection sensor;
**characterised by** a first calculation unit (22) which is configured to apply a directed graph (G) to the first data set (DS1), wherein nodes (11) of the directed graph (G) segment the first data set (DS1) into at least one segment of a movement behaviour of the ego vehicle (10) and/or the fellow vehicle (12) relative to a vehicle environment according to a first condition (14) fulfilled in a time interval, wherein edges (15) of the directed graph (G) symbolise links between the respective nodes (11) and each node (11) has an algorithm (A) which is applied to input data of the node (11) and classifies whether the first condition (14) is fulfilled;
a second calculation unit (24) configured to classify the predetermined traffic situation if all of the determined segments fulfil a second condition of the predetermined traffic situation; and
a data output unit (26) configured to output a second data set (DS2) comprising a class (K) representing the predetermined traffic situation and/or a respective start and end time of the segment representing the predetermined traffic situation
wherein the directed graph (G) has a first layer (17a) comprising at least one node (11), the input of which is the first data set, wherein a second layer (17b) of the directed graph (G), comprising at least a first node (11) and a second node (11), segments the data stream (DS1) into at least one segment of the movement behaviour of the ego vehicle (10) and/or the fellow vehicle (12) relative to a vehicle environment in accordance with the first condition (14) in each case, wherein the segment is a time interval comprising a start and end time of the movement behaviour of the ego vehicle (10) and/or the fellow vehicle (12) relative to the vehicle environment comprised by the data stream (DS1), and wherein a third layer (17c) of the directed graph (G), comprising at least one node (11), classifies the predetermined traffic situation using the time intervals output by the nodes (11) of the second layer (17b) if the combination of the determined time intervals fulfils the second condition (16) of the predetermined traffic situation.

12. computer program comprising program code for performing a method of classifying a predetermined traffic situation comprising a data set of environment data of a motor vehicle according to any one of claims 1 to 10 when the computer program is executed on a computer.

## Revendications

1. Procédé mis en oeuvre par ordinateur pour la classification d'une situation de trafic prédéterminée comprenant un ensemble de données d'environnement d'un véhicule automobile, comprenant les étapes suivantes :
Mise à disposition (S1) d'un premier jeu de données (DS1) qui est conçu comme un flux de données de capteurs comprenant une pluralité de situations de trafic d'un trajet d'un véhicule ego (10) et/ou d'un véhicule fellow (12) détecté par au moins un capteur de reconnaissance d'environnement côté véhicule ;
**caractérisé par** l'application (S2) d'un graphe orienté (G) au premier ensemble de données (DS1), des noeuds (11) du graphe orienté (G) segmentant le premier ensemble de données (DS1) respectivement en fonction d'une première condition (14) remplie dans un intervalle de temps en au moins un segment d'un comportement de déplacement du véhicule égo (10) et/ou du véhicule fantôme (12) par rapport à un environnement du véhicule, dans lequel les arêtes (15) du graphe orienté (G) symbolisent des liens entre les noeuds respectifs (11) et chaque noeud (11) comprend un algorithme (A) qui est appliqué aux données d'entrée du noeud (11) et qui classifie si la première condition (14) est remplie ;
classer (S3) la situation de trafic prédéterminée si tous les segments déterminés remplissent une deuxième condition (16) de la situation de trafic prédéterminée ; et
délivrer (S4) un deuxième ensemble de données (DS2) qui comporte une classe (K) représentant la situation de trafic prédéterminée et/ou un moment respectif de début et de fin du segment représentant la situation de trafic prédéterminée ;
le graphe orienté (G) présentant une première couche (17a) comprenant au moins un noeud (11) dont l'entrée est le premier ensemble de données, une deuxième couche (17b) du graphe orienté (G), comprenant au moins un premier noeud (11) et un deuxième noeud (11), segmentant le flux de données (DS1) respectivement selon la première condition (14) en au moins un segment du comportement de déplacement du véhicule égo (10) et/ou du véhicule fellow (12) par rapport à un environnement de véhicule, le segment étant un intervalle de temps comprenant un moment de début et un moment de fin du comportement de mouvement du véhicule égotique (10) et/ou du véhicule fantôme (12) par rapport à l'environnement du véhicule, compris par le flux de données (DS1), et une troisième couche (17c) du graphe orienté (G), comprenant au moins un noeud (11), en utilisant les intervalles de temps émis par les noeuds (11) de la deuxième couche (17b), classe la situation de trafic prédéterminée si la combinaison des intervalles de temps déterminés remplit la deuxième condition (16) de la situation de trafic prédéterminée.

2. procédé mis en oeuvre par ordinateur selon la revendication 1, dans lequel la situation de trafic prédéfinie à classer est déterminée au préalable, le graphe orienté (G) déterminant respectivement des segments de la situation de trafic prédéfinie.

3. procédé mis en oeuvre par ordinateur selon la revendication 1 ou 2, dans lequel chaque noeud (11) présente au moins une entrée et exactement une sortie, l'au moins une entrée de chaque noeud (11) étant donnée par une arête d'un autre noeud (11) ou par le premier ensemble de données (DS1).

4. Procédé mis en oeuvre par ordinateur selon la revendication 1, dans lequel l'algorithme (A) du noeud respectif (11) délivre, lorsque la première condition (14) est remplie, un instant respectif de début et de fin du segment représentant le comportement de mouvement.

5. Procédé mis en oeuvre par ordinateur selon la revendication 1, dans lequel la deuxième condition (16) de la situation de trafic prédéfinie indique que les segments du véhicule égo (10) déterminés selon la première condition (14) et/ou au moins un segment d'un comportement de déplacement du véhicule fellow (12) se déroulent dans une séquence prédéfinie et/ou dans un intervalle de temps prédéfini.

6. Procédé mis en œuvre par ordinateur selon l'une des revendications précédentes, dans lequel le comportement de déplacement du véhicule égo (10) et/ou du véhicule fellow (12) par rapport à l'environnement du véhicule comprend toutes les actions du véhicule détectables dans le premier jeu de données (DS1) et représentant le comportement de déplacement.

7. Procédé mis en œuvre par ordinateur selon l'une quelconque des revendications précédentes, dans lequel le comportement de déplacement du véhicule égo (10) et/ou du véhicule fellow (12) par rapport à l'environnement du véhicule est un comportement latéral et/ou longitudinal du véhicule égo (10) par rapport à une infrastructure routière et/ou à au moins un véhicule fellow (12) et/ou le comportement latéral et/ou longitudinal du véhicule fellow (12) par rapport à une infrastructure routière et/ou à au moins un véhicule égo (10), le comportement de déplacement de l'ego-véhicule (10) et/ou du véhicule fantôme (12) par rapport à l'environnement du véhicule comprenant un maintien de la voie, un changement de voie, un virage, une accélération constante ou variable et une vitesse qui en résulte, un allumage des feux de stop, un passage d'un objet dans l'environnement du véhicule et/ou une reconnaissance d'un panneau de signalisation.

8. Procédé mis en œuvre par ordinateur selon l'une quelconque des revendications précédentes, dans lequel les données de capteur du trajet du véhicule Ego (10) et/ou du véhicule Fellow (12) détectées par au moins un capteur de reconnaissance de l'environnement du véhicule sont des données de position d'un capteur GNSS, des données IMU, des données de caméra, des données LiDAR, des données de radar et/ou des données ultrasonores.

9. Procédé mis en œuvre par ordinateur selon l'une des revendications précédentes, dans lequel, sur la base du deuxième jeu de données (DS2) émis, un test virtuel est effectué pour valider une fonction de conduite automatisée du véhicule automobile.

10. Procédé mis en oeuvre par ordinateur selon l'une quelconque des revendications précédentes, dans lequel la sortie du graphe orienté (G) et une sortie d'un autre graphe orienté (G) sont utilisées pour classer une autre situation de trafic prédéterminée, dans lequel si une combinaison des sorties du graphe orienté (G) et de l'autre graphe orienté (G) remplit une troisième condition (18) de l'autre situation de trafic prédéterminée, l'autre situation de trafic prédéterminée est classée.

11. Système (1) de classification d'une situation de trafic prédéterminée comprenant un ensemble de données d'environnement d'un véhicule automobile, comprenant :
une mémoire de données (20) qui est configurée pour mettre à disposition un premier ensemble de données (DS1) qui est conçu comme un flux de données de capteurs comprenant une pluralité de situations de trafic d'un trajet d'un véhicule Ego (10) et/ou du véhicule Fellow (12) détecté par au moins un capteur de reconnaissance d'environnement côté véhicule ;
**caractérisé par** une première unité de calcul (22) qui est configurée pour appliquer un graphe orienté (G) au premier ensemble de données (DS1), des noeuds (11) du graphe orienté (G) segmentant le premier ensemble de données (DS1) respectivement en fonction d'une première condition (14) remplie dans un intervalle de temps en au moins un segment d'un comportement de déplacement du véhicule égo (10) et/ou du véhicule fantôme (12) par rapport à un environnement du véhicule, les arêtes (15) du graphe orienté (G) symbolisant des liaisons entre les noeuds respectifs (11) et chaque noeud (11) présentant un algorithme (A) qui est appliqué à des données d'entrée du noeud (11) et qui classifie si la première condition (14) est remplie ;
une deuxième unité de calcul (24) configurée pour classer la situation de trafic prédéterminée si tous les segments déterminés remplissent une deuxième condition de la situation de trafic prédéterminée ; et
une unité de sortie de données (26) configurée pour sortir un deuxième ensemble de données (DS2) comprenant une classe (K) représentant la situation de trafic prédéterminée et/ou un moment de début et de fin respectif du segment représentant la situation de trafic prédéterminée
le graphe orienté (G) présentant une première couche (17a) comprenant au moins un noeud (11) dont l'entrée est le premier ensemble de données, une deuxième couche (17b) du graphe orienté (G), comprenant au moins un premier noeud (11) et un deuxième noeud (11), segmentant le flux de données (DS1) respectivement selon la première condition (14) en au moins un segment du comportement de déplacement du véhicule égo (10) et/ou du véhicule fellow (12) par rapport à un environnement de véhicule, le segment étant un intervalle de temps comprenant un moment de début et un moment de fin du comportement de mouvement du véhicule égotique (10) et/ou du véhicule fantôme (12) par rapport à l'environnement du véhicule, compris par le flux de données (DS1), et une troisième couche (17c) du graphe orienté (G), comprenant au moins un noeud (11), en utilisant les intervalles de temps émis par les noeuds (11) de la deuxième couche (17b), classe la situation de trafic prédéterminée si la combinaison des intervalles de temps déterminés remplit la deuxième condition (16) de la situation de trafic prédéterminée.

12. un programme d'ordinateur comprenant un code de programme pour exécuter un procédé de classification d'une situation de trafic prédéterminée comprenant un ensemble de données d'environnement d'un véhicule automobile selon l'une quelconque des revendications 1 à 10, lorsque le programme d'ordinateur est exécuté sur un ordinateur.
